# EUROPEAN PATENT APPLICATION

(11) **EP 2 905 703 A1**
(43) Date of publication of application: **12.08.2015**
(21) Application number: 15152405.5
(22) Date of filing: 23.01.2015
(51) Int. Cl.: G06F 9/48, G06F 9/50

(54) **Parallel computer system, control method of parallel computer system, and computer-readable storage medium**

(30) Priority: 05.02.2014 JP 2014020807
(71) Applicant: FUJITSU LIMITED, Kawasaki-shi, Kanagawa 211-8588 (JP)
(72) Inventor: Hayashi, Naoki, Kawasaki-shi, Kanagawa 211-8588 (JP)
(74) Representative: Ward, James Norman

(57) **Abstract**

A parallel computer system includes: a plurality of computation nodes; and a management node that includes a memory and a processor coupled to the memory, wherein the processor is configured to: tentatively assign a computation node to an emergency job, allow scheduling of a further job to be performed while setting tentative assignment information that indicates a tentative assignment state to the emergency job and the tentatively assigned computation node when a job that is being executed in the computation node is swapped out in order to assign the computation node to the emergency job preferentially, and perform scheduling based on the tentative assignment information in order of the emergency job, a swap-in standby job, and a further job when scheduling of jobs is performed, and control execution of the jobs based on the scheduling of the jobs, which is performed by the processor.

## Description

### FIELD

The embodiments discussed herein are related to a parallel computer system, a control method of the parallel computer system, and a computer-readable recording medium.

### BACKGROUND

A job scheduler of a parallel computer system in which jobs are executed by a plurality of computation nodes preferentially assigns a computation node to an emergency job the execution priority of which is high and that is desired to be executed urgently by swapping out a general job when the number of free computation nodes that are to be assigned to the emergency job are not sufficient.

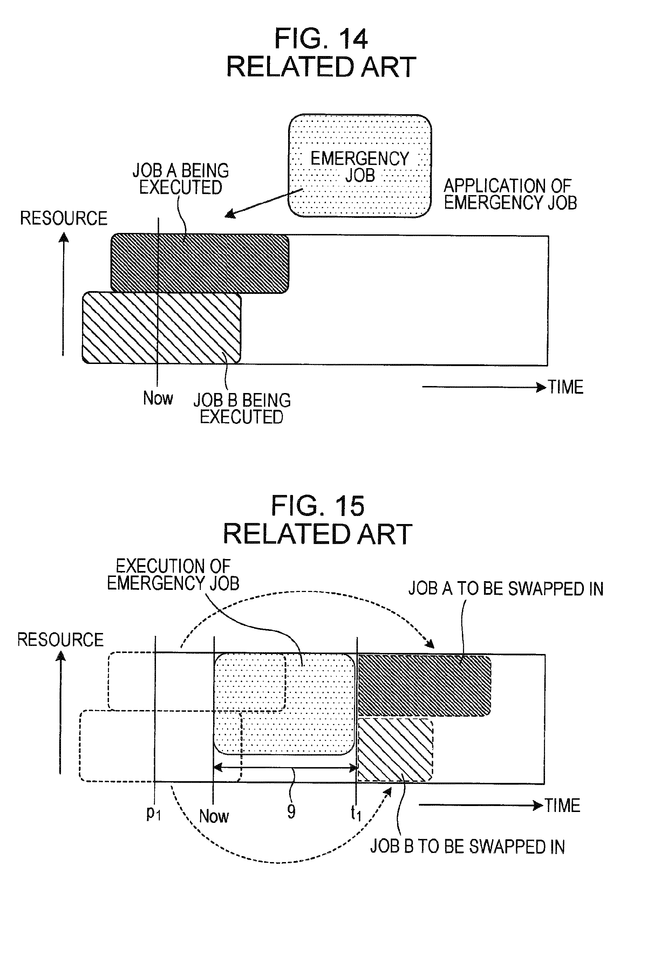

FIG. 14 is a diagram illustrating swap-out. In FIG. 14, the horizontal axis indicates a time, and "Now" indicates a current time point. The vertical axis indicates a resource. Here, "resource" indicates a computer resource, and is a computation node in a parallel computer system. As illustrated in FIG. 14, when an emergency job is applied when jobs A and B are being executed, a job scheduler swaps out the jobs A and B in order to assign the resource to the emergency job.

In addition, when the number of computer resources to be used for the jobs that are swap-out targets is larger than the number of computer resources that are requested by the emergency job, some computer resources remain unused at the time of the swap-out. The job scheduler allows assignment of such available resources, or an excessive resource to the subsequent job in order to utilize the excessive resource effectively. However, in a case where assignment is allowed unconditionally, when an execution time of a job that is an assignment target takes excessively long, it is probable that swap-in of the job having been already swapped out is delayed, so that the job scheduler merely allows assignment to a job the execution of which is to be completed without causing delay.

Japanese Laid-open Patent Publication No. 2-257337, and Japanese Laid-open Patent Publication No. 2009-075956 are the related arts.

However, there is a problem that it is difficult for the job scheduler to utilize the excessive resource effectively. FIG. 15 is a diagram illustrating assignment of an excessive resource. In FIG. 15, "p₁" indicates the current time point illustrated in FIG. 14, that is, a time point at which the emergency job is applied. "Now" indicates a time point at which the execution of the emergency job is started. The time period from "p₁" to "Now" is a time that is taken to swap out jobs being executed. In addition, "t₁" indicates a time point at which the jobs that have been swapped out are swapped in. The arrow 9 indicates a time period during which the excessive resource is available.

As illustrated in FIG. 15, during the time period from "p₁" to "Now", the excessive resource is not available. However, the time desired for the swap-out depends on an amount of a memory to be used by the job, so that the time of swap-out changes depending on the amount of the job. Thus, even when a time that is taken for the swap-out of the job B is smaller than that of the job A, and the excessive resource become available earlier than the time indicated by "Now", the excessive resource is not utilized until swap-out of all of the jobs is completed.

An object of an embodiment is to provide a parallel computer system, a control method of the parallel computer system in which an excessive resource that remains available at the time of swap-out is utilized effectively, and a computer-readable storage medium.

### SUMMARY

According to an aspect of the invention, a parallel computer system includes: a plurality of computation nodes; and a management node that includes a memory and a processor coupled to the memory, wherein the processor is configured to: tentatively assign a computation node to an emergency job, allow scheduling of a further job to be performed while setting tentative assignment information that indicates a tentative assignment state to the emergency job and the tentatively assigned computation node when a job that is being executed in the computation node is swapped out in order to assign the computation node to the emergency job preferentially, and perform scheduling based on the tentative assignment information in order of the emergency job, a swap-in standby job, and a further job when scheduling of jobs is performed, and control execution of the jobs based on the scheduling of the jobs, which is performed by the processor.

### BRIEF DESCRIPTION OF DRAWINGS

FIG. 1 is a diagram illustrating a configuration of a parallel computer system according to an embodiment;
FIG. 2 is a diagram illustrating a function configuration of a job management node;
FIG. 3 is a diagram illustrating a function configuration of a job scheduler;
FIG. 4 is a diagram illustrating an example of a management table;
FIG. 5 is a diagram illustrating a state of the management table at the time of tentative assignment;
FIG. 6 is a diagram illustrating a state of the management table at the time of completion of swap-out of a job B;
FIG. 7 is a diagram illustrating a state of the management table at the time of assignment of the subsequent job C;
FIG. 8 is a diagram illustrating a state of the management table at the time of completion of swap-out of a job A;
FIG. 9 is a flowchart illustrating a flow of scheduling processing by the job scheduler;
FIG. 10 is a flowchart illustrating a flow of assignment management table initialization processing by a management table initialization unit;
FIG. 11 is a flowchart illustrating a flow of resource assignment processing by a resource assignment unit;
FIG. 12 is a flowchart illustrating a flow of assignment result setting processing by an assignment result setting unit;
FIG. 13 is a diagram illustrating a hardware configuration of a computer that executes a job management program according to an embodiment;
FIG. 14 is a diagram illustrating swap-out; and
FIG. 15 is a diagram illustrating assignment of an excessive resource.

### DESCRIPTION OF EMBODIMENTS

The embodiments that are related to a parallel computer system, a control method of the parallel computer system, and a control program of a management node are described in detail with reference to drawings. The embodiments are not limited to the technique that is discussed herein.

### [Embodiments]

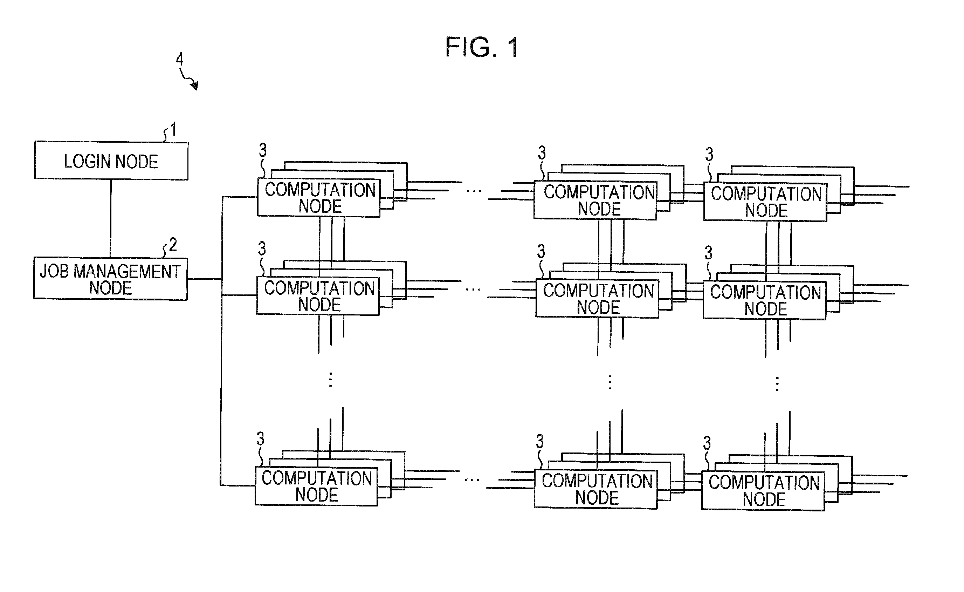

First, a configuration of a parallel computer system according to an embodiment is described. FIG. 1 is a diagram illustrating the configuration of the parallel computer system according to the embodiment. As illustrated in FIG. 1, a parallel computer system 4 includes a login node 1, a job management node 2, and a plurality of computation nodes 3.

The login node 1 is a terminal device that accepts a job execution request from a user. Here, the single login node 1 is merely illustrated, but the parallel computer system 4 may include a plurality of login nodes 1. The job management node 2 performs scheduling of an assignment resource and the execution time of a job the execution of which has been requested. Here, the assignment resource is a computation node 3.

The computation node 3 includes a central processing unit (CPU) and a memory, and executes jobs with a further computation node 3 in parallel. In FIG. 1, a case in which the computation nodes 3 are connected to each other in a three-dimensional network is illustrated, but generally, the computation nodes 3 are connected to each other in a given dimension.

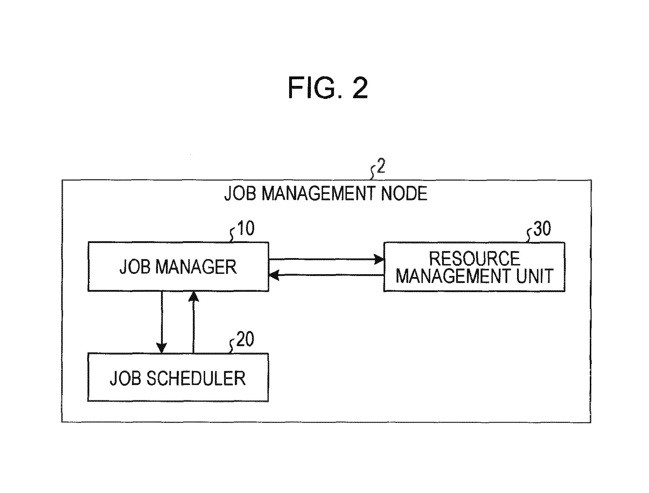

FIG. 2 is a diagram illustrating a function configuration of the job management node 2. As illustrated in FIG. 2, the job management node 2 includes a job manager 10, a job scheduler 20, and a resource management unit 30.

The job manager 10 manages a job that is specified by the user. The job manager 10 may communicate with the login node 1 through a network. The job scheduler 20 manages the free state of the computer resources, or the computation nodes 3, and determines the schedule of a computation node 3 that is assigned to the job. The resource management unit 30 controls the execution of assignment of the computation node 3 to the job.

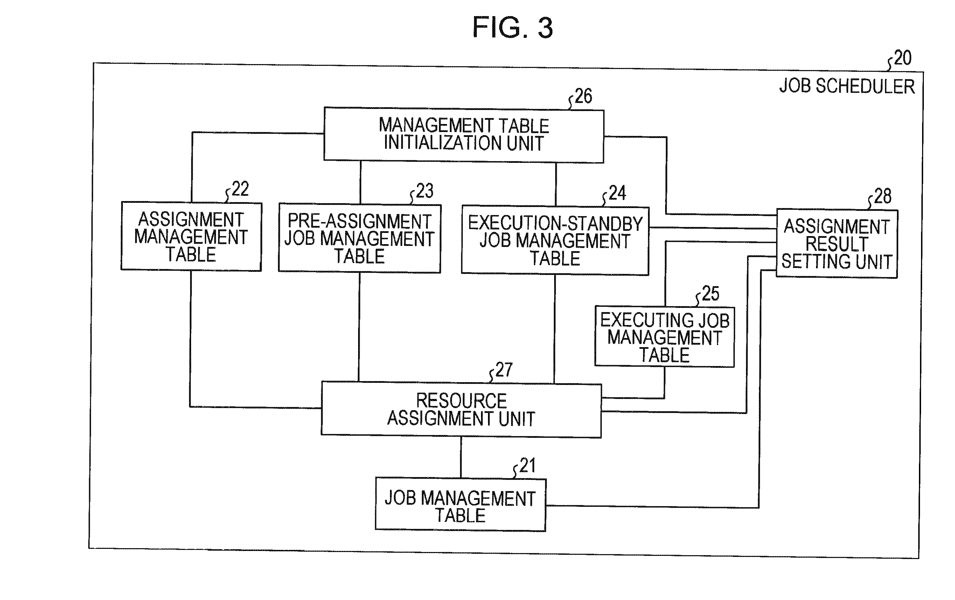

A function configuration of the job scheduler 20 is described below. FIG. 3 is the function configuration of the job scheduler 20. As illustrated in FIG. 3, the job scheduler 20 includes a job management table 21, an assignment management table 22, a pre-assignment job management table 23, an execution-standby job management table 24, and an executing job management table 25. In addition, the job scheduler 20 also includes a management table initialization unit 26, a resource assignment unit 27, and an assignment result setting unit 28.

The job management table 21 is used to manage pieces of information on the job that has been accepted from the user, and stores the pieces of information desired for scheduling of the job such as the type, a job priority level, a request resource, an elapsed time limit value, the state, and a tentative assignment flag.

Here, there are several types of jobs including "step job" indicating one of jobs that are executed in series, "interactive job" indicating a job that is executed while interaction with the user is performed, and "general job" indicating a general job. The job priority level indicates a priority level of a job to be executed. The job priority level for an emergency job is set at the highest.

The request resource indicates the dimension of computation nodes 3 that are requested by the job and the number of computation nodes 3. The assignment of computation nodes 3 that form a rectangle is performed when the dimension of a computation node 3 that is requested by the job is 2, and the assignment of computation nodes 3 that form a rectangular solid is performed when the dimension of a computation node 3 that is requested by the job is 3.

The elapsed time limit value indicates the maximum value of the execution time of the job. The job the execution time of which exceeds the elapsed time limit value is terminated. The state indicates the execution state of the job. As the state, there are "pre-assignment" that indicates a state before a computation node 3 is assigned to the job, "execution-standby" that indicates a state of execution-standby after the computation node 3 has been assigned to be job, "executing" that indicates a state in which the job is being executed, "swapped-out" that indicates a state in which the job is swapped out, and the like. The tentative assignment flag is set when the computation node 3 is tentatively assigned to the job. The tentative assignment flag is described in detail later.

The assignment management table 22 is a table to which the assignment state of a computation node 3 to a job is recorded. In the parallel computer system 4, for example, when the computation nodes 3 are connected to each other in a three-dimensional network, the assignment management table 22 also becomes in the three-dimensional network. In addition, the assignment management table 22 includes a tentative assignment flag that indicates that the computation node 3 is tentatively assigned to the job. The tentative assignment flag that is included in the assignment management table 22 is described in detail later.

The pre-assignment job management table 23 stores a job before a computation node 3 is assigned to the job, and the execution-standby job management table 24 stores a job in execution-standby state after the computation node 3 has been assigned to the job. The executing job management table 25 stores a job that is being executed. The pre-assignment job management table 23, the execution-standby job management table 24, and the executing job management table 25 store pointers to the job management table 21 as pieces of information on the job.

The management table initialization unit 26 initializes the assignment management table 22. The management table initialization unit 26 is started up when the scheduling is started by the job scheduler 20, or when there is a change in the computer resource. Here, when there is a change in the computer resource, re-scheduling is desired due to completion of the job or completion of the swap-out. That is, the assignment management table 22 is initialized at the time of re-scheduling.

The resource assignment unit 27 searches the assignment management table 22 and assigns a computation node 3 to a job. The resource assignment unit 27 performs the assignment of the computation node 3 based on a job priority level of the job. In addition, the resource assignment unit 27 assigns computation nodes 3 to jobs in the order of an emergency job, a swap-in standby job, and a general job. That is, a swap-in standby job is not scheduled as long as an emergency job is not scheduled. In addition, a general job is not scheduled as long as an emergency job and a swap-in standby job are not scheduled. However, when a computation node 3 is tentatively assigned to an emergency job, scheduling may be performed on a swap-in standby job and a general job.

In addition, the resource assignment unit 27 performs job scheduling based on the tentative assignment flags that are included in the job management table 21 and the assignment management table 22, but the job scheduling based on the tentative assignment flag is described in detail later.

The assignment result setting unit 28 executes setting processing based on the assignment result of a job. For example, the assignment result setting unit 28 performs setting of the execution-standby job management table 24 and the executing job management table 25, based on the assignment result of the job.

The job scheduler 20 assigns computation nodes 3 to jobs in the order of a job that is being executed to a job that is not executed yet. The job scheduler 20 obtains a job that is being executed, from the executing job management table 25, and obtains a non-executed job from the pre-assignment job management table 23. An execution-standby job after assignment is transferred from the pre-assignment job management table 23 to the execution-standby job management table 24, and a job the execution of which has been started is transferred to the executing job management table 25. In addition, from among the computation nodes 3 the assignment of which has been performed in the assignment management table 22, a computation node 3 that has been assigned to a job that is being executed is not changed, but a computation node 3 that has been assigned to a job that is not being executed may be changed.

Tentative assignment of a computation node 3 by the job scheduler 20 is described below. In a case where the job scheduler 20 assigns a computation node 3 to an emergency job, when there is no free space of the computation node 3 due to a job that is being executed, the job scheduler 20 swaps out the job that is being executed. In addition, the job scheduler 20 performs tentative assignment of a computation node 3 to be assigned to the emergency job that is allowed to be executed immediately due to the swap-out, at the time of determination of the swap-out target job.

Here, the job scheduler 20 sets the tentative assignment flags of the assignment management table 22 and the job management table 21, with the tentative assignment. In addition, the job scheduler 20 processes a computation node 3 on which the tentative assignment is performed, in the assignment processing of the computation node 3 to a job, as follows.

(a) The job scheduler 20 does not assign a computation node 3 to a job other than a job on which the tentative assignment has been performed. (b) The job scheduler 20 may assign a tentatively assigned computation node 3 to a job to which the tentative assignment has been performed. That is, the job scheduler 20 may cause the state of the tentatively assigned computation node 3 to be "assigned" state for the job to which the tentative assignment has been performed.

However, to a job to which a certain computation node 3 has been tentatively assigned, the job scheduler 20 may assign a further computation node 3. When the job scheduler 20 performs assignment of the tentatively assigned computation node 3, the job scheduler 20 releases the tentative assignment.

In addition, the job scheduler 20 may perform tentative assignment of a computation node 3 that is being used for a job that is being executed and is not swapped-out yet so that the computation node 3 is overlapped with a computation node 3 that has been reserved by the tentative assignment. It is desirable that a computation node 3 on which the assignment has been already performed becomes available for further assignment, but the job scheduler 20 performs tentative assignment of a computation node 3 that is not available yet so that the computation node 3 is overlapped with a computation node 3 on which tentative assignment has been performed.

In addition, the job scheduler 20 continues scheduling even when not all pieces of swap-out processing for target jobs on which swap-out is being performed due to an emergency job is completed. In addition, the job scheduler 20 may assign a computation node 3 on which assignment or even tentative assignment is not performed, to the subsequent job as a free resource.

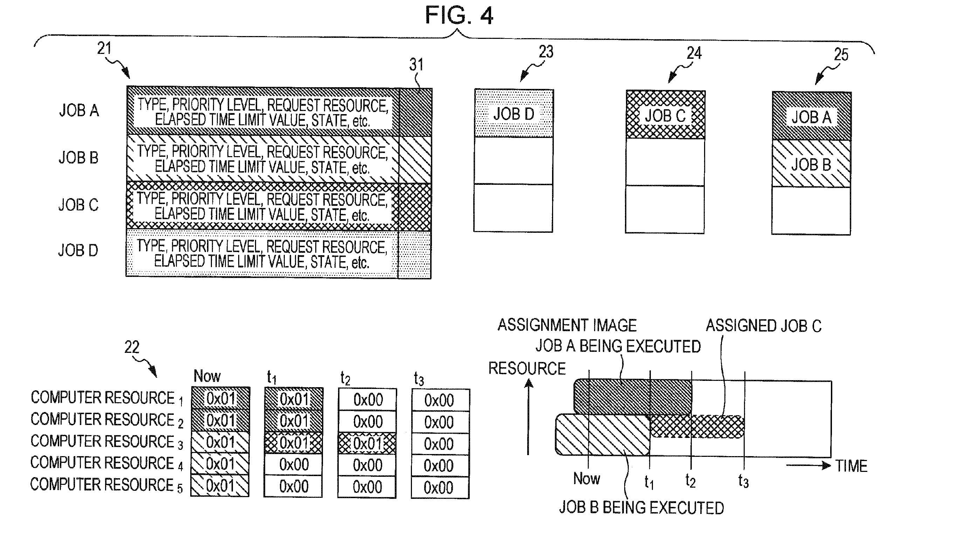

Tentative assignment and job schedule based on the tentative assignment are described with reference to FIGs. 4 to 8. FIG. 4 is a diagram illustrating an example of the management table. Here, the management table is the generic name of the job management table 21, the assignment management table 22, the pre-assignment job management table 23, the execution-standby job management table 24, and the executing job management table 25. In addition, in FIGs. 4 to 8, for convenience of description, the five computation nodes 3 are arranged as computer resources 1 to 5, in one dimension.

As illustrated in FIG. 4, jobs A and B are being executed, and registered to the executing job management table 25. To a job C, assignment is performed, and the job C is in the execution-standby state and is registered to the execution-standby job management table 24. A job D is an applied job, and in the assignment processing standby state, and registered to the pre-assignment job management table 23.

The resource assignment unit 27 records a usage time that ranges from the start time of a job to the estimated completion time that is calculated by the execution elapsed time limit value, to the assignment management table 22, for each of the computation nodes 3. The assignment management table 22 is created each time a computer resource amount, that is, the number of computation nodes 3 is changed.

Hereinafter, the assignment state of the assignment management table 22 at each time point is referred to as a time-map. In the time-map, "01" of hexadecimal, that is, "0x01" indicates that a job is assigned to a computation node 3, and "00" of hexadecimal, that is, "0x00" indicates that a job is not assigned to a computation node 3.

An estimated time t₂ at which the job A is terminated and the computer resources 1 and 2 are released is obtained from the start time and the execution elapsed time limit value. Similarly, an estimated time t₁ at which the computer resources 3 to 5 are released from the job B is obtained. The current assignment to the job C is not performed at the current time point due to a job that is being executed, so that the future assignment to the job C is reserved after a time at which the job that is being executed is terminated and the computer resources is released. In the example of FIG. 4, as illustrated in the assignment image, the assignment to the job C is performed during the time from "t₁" to "t₃".

In the current time "Now", the jobs A and B are being executed, so that at the time-map of "Now", setting of the state is performed in which the assignment of any computer resources is being performed. The estimated resource change time next to "Now" is "t₁", and at the time-map of "t₁", setting of the state is performed in which the job B is released. To the time-map of the estimated resource change time t₂ next to "t₁", the state in which the job A is also released is set. The job C is added to the time-map of "t₁" due to the subsequent assignment, and the resource that has been assigned to the job C is released at the time-map of "t₃", but the time-map of "t₂" exists during that time, so that the state in which the resource is assigned to the job C is set to the time-map of "t₂" as well.

As described above, a free space of the computer resource is managed by a portion represented as "0x00" at each of the times that are indicated by the time-map. The assignment to the job D is performed by using such a free space.

When an emergency job is applied, the job scheduler 20 performs re-scheduling, and executes processing so that assignment to the emergency job is performed with the highest priority. When the free space of the computer resource is not enough at the time-map of the current time "Now" in the assignment management table 22, and the emergency job corresponds to future assignment, the job scheduler 20 executes processing in which a requested computer resource by the emergency job is secured. Specifically, the job scheduler 20 searches for and determines a job that is being executed and is a target terminated by swap-out, and performs the swap-out.

The job scheduler 20 performs tentative assignment on a resource that is to be assigned to the emergency job, on the assumption that the swap-out is completed and the computer resource has an available space. The resource of the tentative assignment is secured until a time that is obtained by adding a time that is desired for the swap-out processing, to a time that ranges from the current time to the execution elapsed time limit value of the emergency job. When the emergency job is applied in the state illustrated in FIG. 4, the scheduling is performed again on the job C that is to be assigned after the assignment of the emergency job.

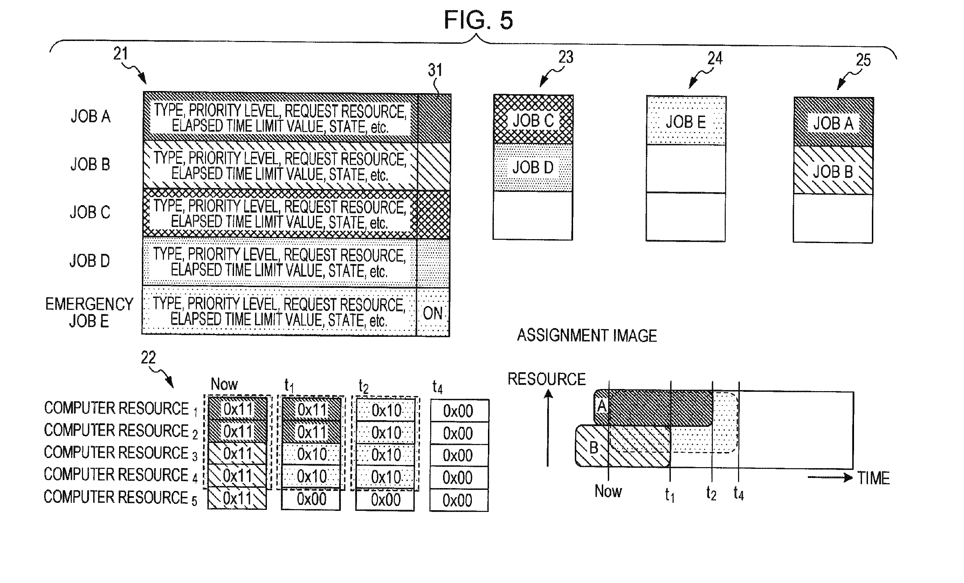

FIG. 5 is a diagram illustrating a state of the management table at a time when a swap-out target job is determined due to application of an emergency job, and tentative assignment is performed. The job scheduler 20 sets "ON" to a tentative assignment flag 31 of the job management table 21 for the emergency job to which the tentative assignment has been performed.

The tentative assignment is different from further assignment in that a computation node for a job that is being executed the swap-out of which is not completed is overlapped with the computation node on which the tentative assignment has been performed. It is assumed that the tentative assignment is performed from the current time, so that the job scheduler 20 sets a display that indicates that assignment is being performed, from the time-map of the current time "Now" in the assignment management table 22, but the display is set so that the tentative assignment is distinguished from regular assignment. Here, the job scheduler 20 obtains OR between the assignment state of the computation node 3 before the tentative assignment and "0x10". Therefore, the display that indicates that assignment of the overlapped computer resource is being performed corresponds to "0x11", and may be distinguished from the further assignment.

In a case where setting of the tentative assignment flag 31 is performed at the time of assignment of an emergency job, the job scheduler 20 releases a computer resource on which the tentative assignment has been performed only when the computer resource is to be assigned to the job so that a failure of the assignment to the emergency job due to the tentative assignment does not occur. The job scheduler 20 may maintain the display that indicates that the assignment of the overlapped computer resource is being performed, by removing "0x00" from the assignment management table 22 due to the release of the tentative assignment. In a case where the release of the tentative assignment is performed in a unit of emergency job, the job scheduler 20 does not release tentative assignment of a further emergency job even when there are pieces of tentative assignment to a plurality of emergency jobs.

It is only sufficient for the job scheduler 20 to determine that the display of assignment in the assignment management table 22, which indicates that the assignment is being performed, is "0x00", in search of a free resource, similar to regular search. As a result of the search, the present assignment is allowed to be performed at the current time point, the job scheduler 20 performs scheduling so that the execution is started, and the setting of the tentative assignment flag 31 is released, and the tentative assignment information is released. The current assignment is not allowed to be performed at the current time point (the assignment corresponds to future assignment), the job scheduler 20 restores the released tentative assignment.

As a result of the assignment, the job scheduler 20 transfers the emergency job from the pre-assignment job management table 23 to the execution-standby job management table 24, but a job to which the tentative assignment flag 31 is set is controlled so that the execution is not started. Therefore, even when the job scheduler 20 performs the tentative assignment from the current time "Now", the job scheduler 20 avoids the execution of a dummy job using an actual resource. As a result, the emergency job to which the computer resource has been tentatively assigned is held in the execution-standby job management table 24 due to the non-execution.

The job scheduler 20 does not perform re-scheduling on the emergency job to which the tentative assignment has been performed, but may perform the assignment to the emergency job again from the current time "Now" each time the re-scheduling processing is executed. In this case, it is unnecessary for the job scheduler 20 to add a time desired for the swap-out processing, to a time that ranges from the current time to the execution elapsed time limit value of the emergency job in order to secure a resource for the tentative assignment. However, it is desirable that the job scheduler 20 increases the emergency job termination time t₄ illustrated in FIG. 5, with the passage of time for each re-scheduling. When addition of the time that is desired for the swap-out processing is performed, and the time of t₄ is fixed, the execution enabled time by the excessive resource due to the swap-out may be further obtained, and a time period in which the assignment is allowed to be performed is increased in the scheduling of the subsequent job.

After the tentative assignment has been completed, the job scheduler 20 starts swap-out of the jobs A and B. The job scheduler 20 does not complete the assignment of the emergency job at the time point, but continues the scheduling of the subsequent job. The job scheduler 20 obtains the job that is being executed, from the executing job management table 25, and obtains jobs in the order of the emergency job (tentative assignment), a swap-in standby job, and a general job, from the pre-assignment job management table 23 and the execution-standby job management table 24 to re-create the assignment management table 22.

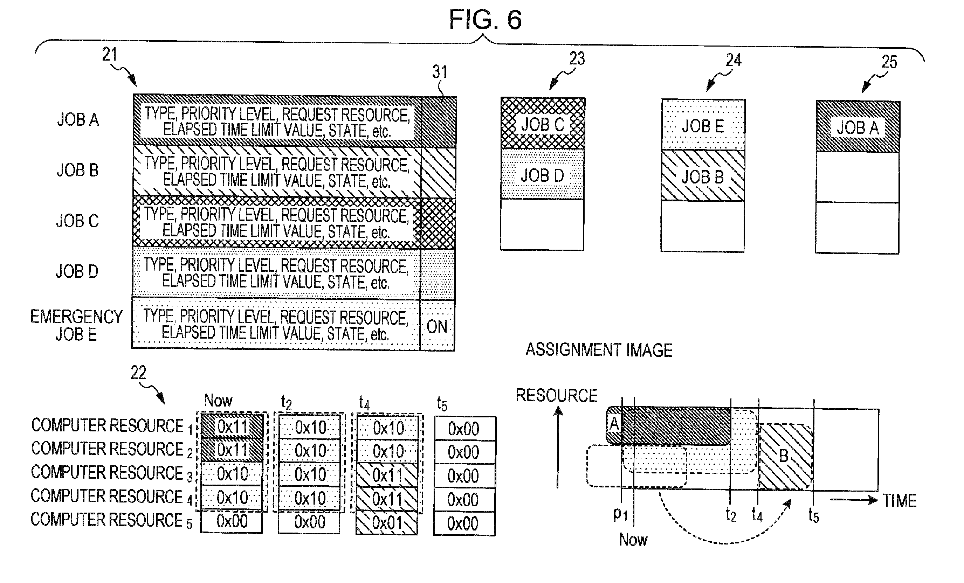

FIG. 6 is a diagram illustrating the state of the management table at the time of completion of swap-out of the job B. Pieces of swap-out processing of a plurality of jobs are executed in parallel, but completion timing of the swap-out is different depending on the scale of a job and a memory, so that not all pieces of swap-out of the jobs are completed at the same time. The job scheduler 20 performs assignment on a swapped-out job as a swap-in standby job similar to a general job.

However, an estimated time at which the job the execution of which has been restarted after the swap-in is terminated and the computer resource is released is calculated based on a value that is obtained by subtracting the time during which the execution that has been performed until the swap-out, from the execution elapsed time limit value. In FIG. 6, in the job B, the execution is to be resumed at "t₄", and terminated at "t₅".

The job scheduler 20 performs re-assignment to the swap-in standby job with the job priority level that is high next to that of the emergency job in order to perform the swap-in immediately after the emergency job has been completed. In the tentative assignment, the execution resource to the emergency job is reserved, and setting of the assignment plan to the swap-in standby job is also performed, so that the job scheduler 20 performs the assignment to a general job.

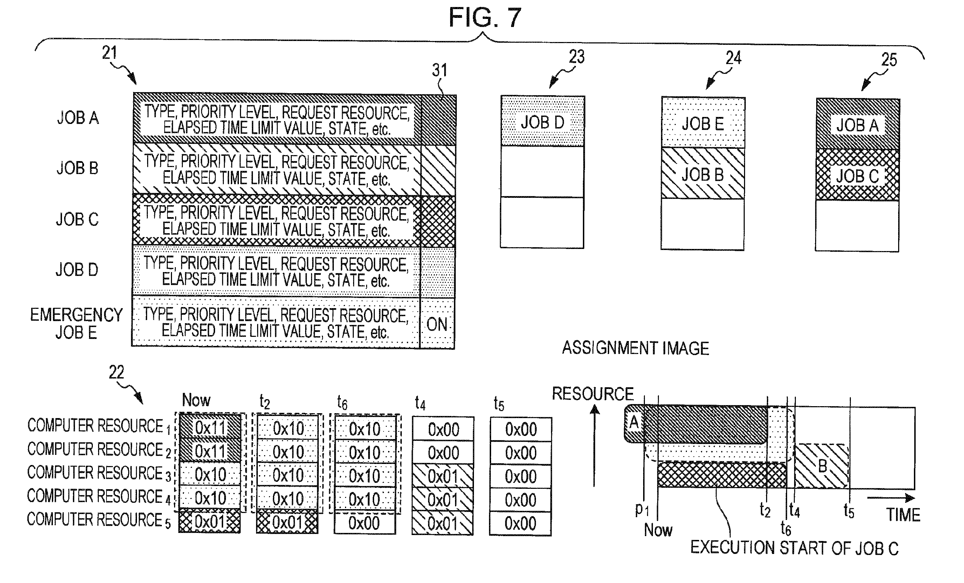

FIG. 7 is a diagram illustrating a state of the management table at the time of assignment to the subsequent job C by the scheduling of the subsequent job after the state illustrated in FIG. 6. The job C the assignment to which has been completed is set to the execution-standby job management table 24, but is executed and started because the job C is started from the current time "Now", and transferred to the executing job management table 25. Then, the assignment processing of the job D is executed.

If the estimated execution time of the job C is larger than "(t₄-Now)", the assignment of the computer resource 5 to the job C is not performed from "Now", and the future assignment of the computer resource after "t₄" is performed. An excessive computer resource that occurs due to the swap-out corresponds to a time that ranges from the current time "Now" of computer resource 5 to "t₄", and the assignment of the excessive computer resource merely to a job the estimated execution time of which is smaller than "(t₄-Now)" is allowed to be performed. The job that is executed in the range of the resource does not cause a swap-in standby job to be delayed. When the emergency job is terminated ahead of schedule due to cancellation or the like after the execution of the emergency job has been started, the job C is being executed, so that the job B is not allowed to be swapped in, but the original plan of swap-in is not delayed.

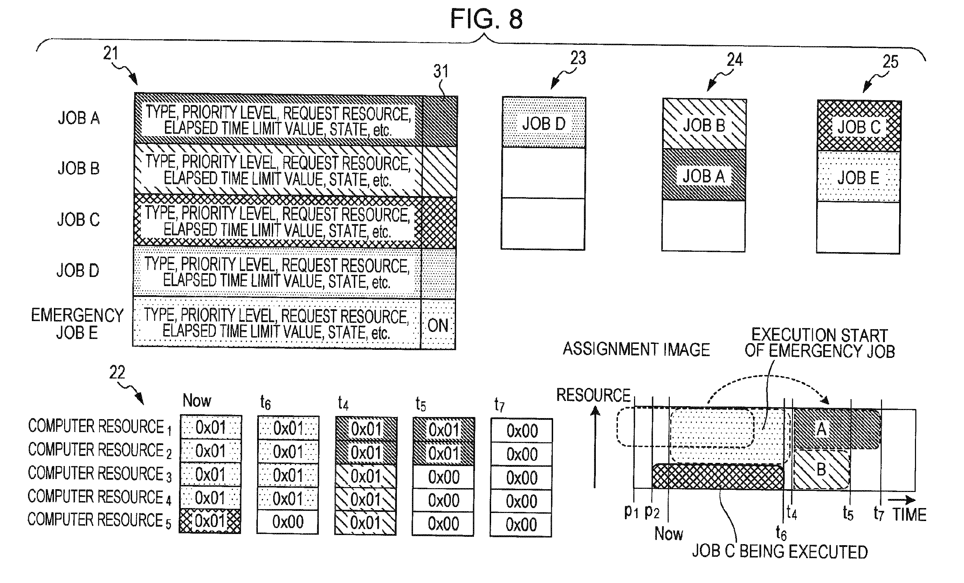

FIG. 8 is a diagram illustrating a state of the management table at the time of completion of the swap-out of the job A. The job A is not in the executing state due to the swap-out, so that the job A is set to the execution-standby job management table 24 as a swap-in standby job.

In the re-setting of the assignment management table 22, first, tentative assignment to the job C that is being executed and emergency job E is set. Then, in order to perform assignment to the emergency job E, the job scheduler 20 releases the tentative assignment to the emergency job E. As a result of the release, there is a free space to be assigned to be emergency job E in the computer resource, so that the assignment is performed from the current time "Now", and the setting of the tentative assignment flag 31 is released, and the emergency job E is set to the execution-standby job management table 24. The job scheduler 20 takes out the emergency job E from the execution-standby job management table 24 by setting processing of the assignment result of the emergency job E, and starts the execution.

A long time may be taken until the current time "Now" at which the assignment to the emergency job E is completed due to job swap processing or the like, for the time p₁ at which the tentative assignment is determined. In conventional processing, the assignment of the computer resource 5 that is an excessive resource due to the swap-out is not allowed to be performed until "Now" before the assignment to the emergency job E is completed, but in the processing discussed herein, the computer resource 5 may be used as an excessive resource from the time p₂ that is earlier than "Now".

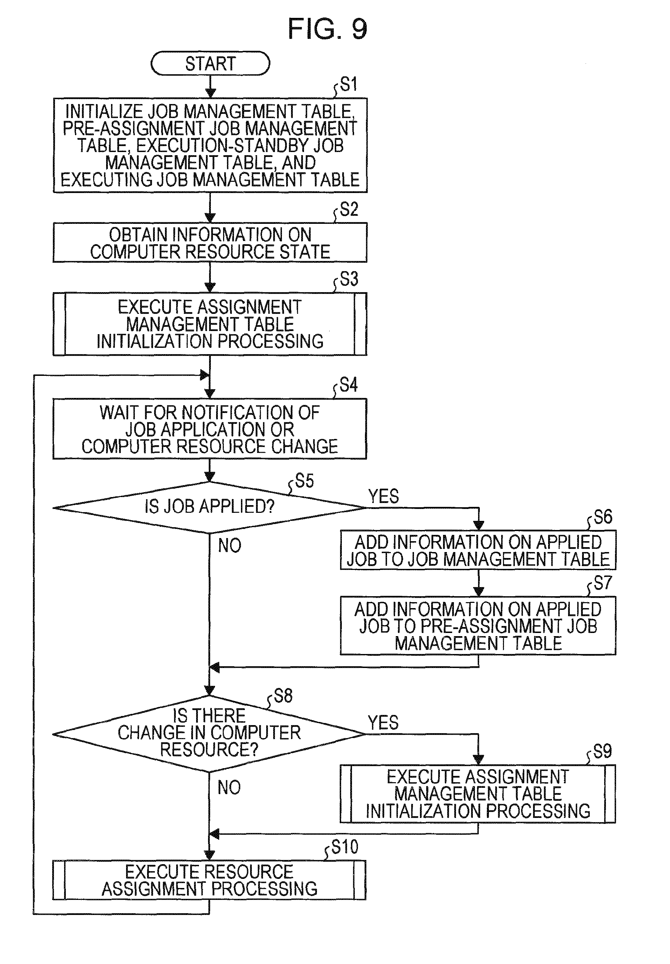

A flow of scheduling processing by the job scheduler 20 is described below. FIG. 9 is a flowchart illustrating the flow of the scheduling processing by the job scheduler 20. As illustrated in FIG. 9, first, the job scheduler 20 initializes the job management table 21, the pre-assignment job management table 23, the execution-standby job management table 24, and the executing job management table 25 (Step S1).

In addition, the job scheduler 20 obtains information on the state of computer resources, from the resource management unit 30 through the job manager 10 (Step S2), and executes assignment management table initialization processing by which the assignment management table 22 is initialized (Step S3).

In addition, the job scheduler 20 waits for notification of job application or computer resource change (Step S4). Here, the computer resource change is notified in a case where the execution of a job is completed, a case in which the swap-out is completed, a case in which a computation node 3 is failed, a case in which the computation node 3 is recovered from the failure, or the like.

In addition, when a job is applied (Yes in Step S5), the job scheduler 20 adds information on the applied job to the job management table 21 (Step S6), and adds the information on the applied job to the pre-assignment job management table 23 (Step S7).

In addition, when there is a change in a computer resource (Yes in Step S8), the job scheduler 20 executes the assignment management table initialization processing (Step S9).

In addition, the job scheduler 20 executes resource assignment processing by which a resource is assigned to the job (Step S10), and the flow returns to Step S4, and the job scheduler 20 waits for notification of job application or computer resource change.

As described above, the job scheduler 20 may perform job scheduling that corresponds to the state of the computer resource by executing the resource assignment processing when there is a change in the computer resource.

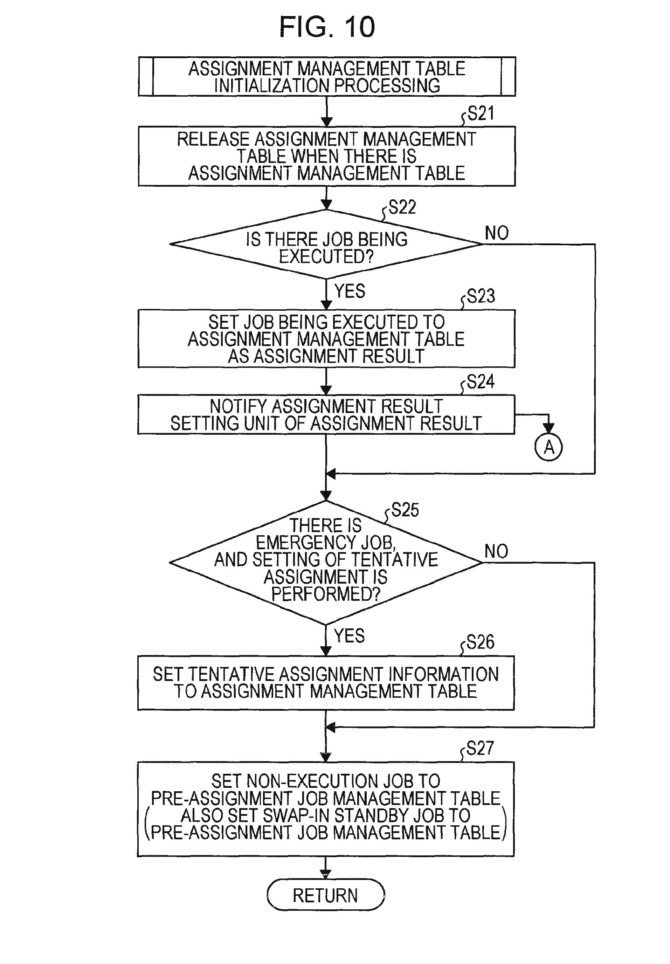

A flow of the assignment management table initialization processing by the management table initialization unit 26 is described below. FIG. 10 is a flowchart illustrating the flow of the assignment management table initialization processing by the management table initialization unit 26.

As illustrated in FIG. 10, the management table initialization unit 26 releases the assignment management table 22 when there is the assignment management table 22 (Step S21), and determines whether or not there is a job that is being executed (Step S22). As a result, when there is a job that is being executed, the management table initialization unit 26 sets the job that is being executed, to the assignment management table 22 as the assignment result (Step S23), and notifies the assignment result setting unit 28 of the assignment result (Step S24).

In addition, the management table initialization unit 26 determines whether or not there is an emergency job, and setting of the tentative assignment flag 31 is performed (Step S25), and when there is an emergency job, and setting of the tentative assignment flag 31 is performed, tentative assignment information is set to the assignment management table 22 (Step S26).

In addition, the management table initialization unit 26 sets a non-execution job to the pre-assignment job management table 23 (Step S27). Here, the management table initialization unit 26 sets a swap-in standby job, that is, a job the swap-out of which has been completed, to the pre-assignment job management table 23.

As described above, the management table initialization unit 26 sets the emergency job to which the tentative assignment has been performed, to the assignment management table 22, and performs re-scheduling, so that it may be avoided that re-scheduling of the emergency job to which the tentative assignment has been performed is repeated.

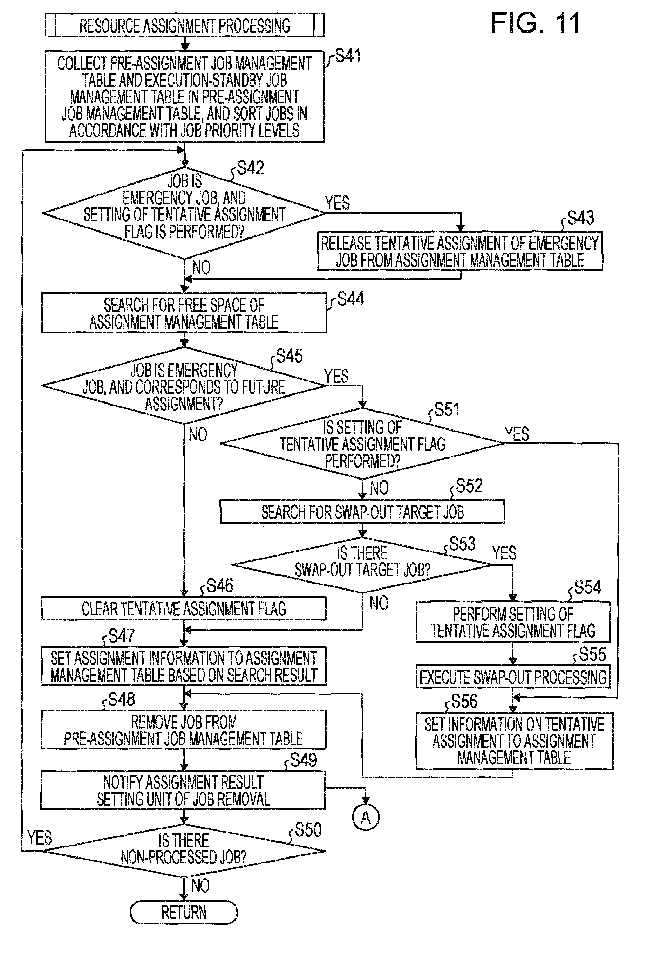

A flow of the resource assignment processing by the resource assignment unit 27 is described below. FIG. 11 is a flowchart illustrating the flow of the resource assignment processing by the resource assignment unit 27. As illustrated in FIG. 11, the resource assignment unit 27 collects the pre-assignment job management table 23 and the execution-standby job management table 24 in the pre-assignment job management table 23, and sorts jobs in accordance with the job priority levels (Step S41). Here, the highest priority is given to an emergency job.

In addition, the resource assignment unit 27 takes out one job from the leading of the pre-assignment job management table 23, and determines whether or not the taken-out job is an emergency job, and setting of the tentative assignment flag is performed (Step S42). As a result, when the taken-out job is an emergency job, and setting of the tentative assignment flag is performed, the resource assignment unit 27 releases the tentative assignment to the emergency job, from the assignment management table 22 (Step S43). By releasing the tentative assignment to the emergency job from the assignment management table 22, the resource assignment unit 27 may assign the computer resource that has been tentatively assigned to the emergency job, to the emergency job.

The resource assignment unit 27 searches for a free space of the assignment management table 22 (Step S44), and determines whether or not a job to which the assignment is to be performed is an emergency job and corresponds to future assignment (Step S45). As a result, when the job to which the assignment is to be performed is not an emergency job or corresponds to current assignment to the emergency job, the resource assignment unit 27 clears setting of the tentative assignment flag 31 when the setting is performed (Step S46). This is why the tentative assignment is not desired because the execution of the emergency job is started when the job corresponds to the current assignment to the emergency job.

The resource assignment unit 27 sets assignment information to the assignment management table 22 based on the search result (Step S47), and removes the job from the pre-assignment job management table 23 (Step S48). Then, the resource assignment unit 27 notifies the assignment result setting unit 28 of the removal of the job (Step S49), and determines whether or not there is a non-processed job (Step S50). As a result, when there is a non-processed job, in the resource assignment unit 27, the flow returns to Step S42 in order to assign the computer resource to the subsequent job, and when there is no non-processed job, the processing ends.

When the job to which the assignment is to be performed is an emergency job, and corresponds to future assignment, the resource assignment unit 27 determines whether or not setting of the tentative assignment flag 31 is performed (Step S51). As a result, when setting of the tentative assignment flag 31 is not performed, the tentative assignment is performed, so that the resource assignment unit 27 searches for a swap-out target job (Step S52). In addition, the resource assignment unit 27 determines whether or not there is a swap-out target job (Step S53), and when there is no swap-out target job, the flow proceeds to Step S47 without performing the tentative assignment.

When there is a swap-out target job, the tentative assignment is performed, so that the resource assignment unit 27 performs setting of the tentative assignment flag 31 (Step S54), and executes swap-out processing for the swap-out target job (Step S55). Then, the resource assignment unit 27 sets information on the tentative assignment, to the assignment management table 22 (Step S56), and the flow proceeds to Step S48.

When setting of the tentative assignment flag 31 is performed (Yes in Step S51), the tentative assignment to the emergency job has been already performed, so that the flow proceeds to Step S56.

As described above, by performing the tentative assignment to the emergency job that corresponds to future assignment, the resource assignment unit 27 may assign the excessive resource the swap-out of which has been completed, to a further job before the emergency job is executed.

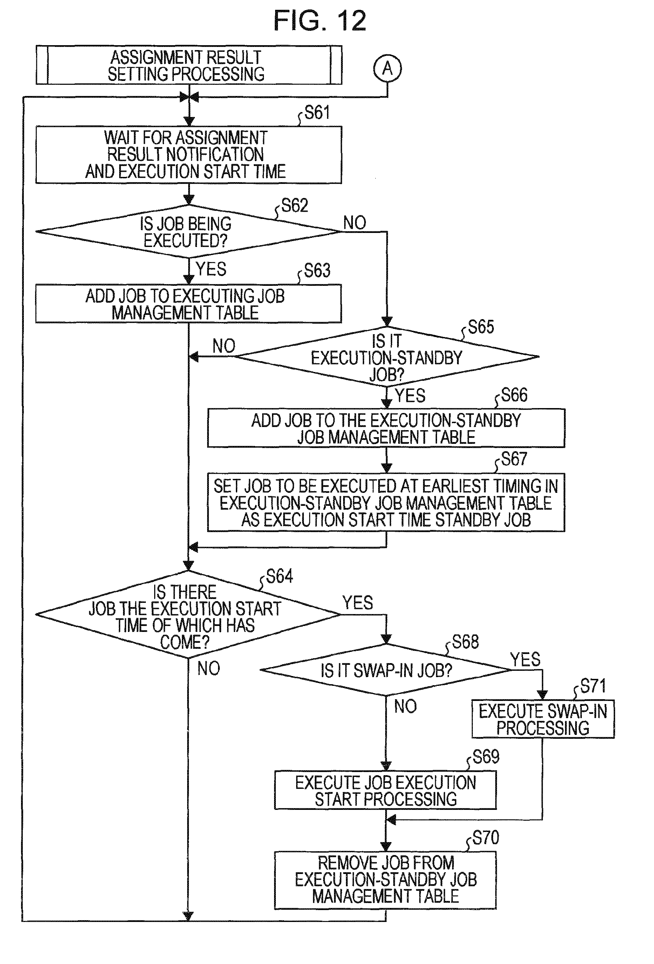

A flow of the assignment result setting processing by the assignment result setting unit 28 is described below. FIG. 12 is a flowchart illustrating the flow of the assignment result setting processing by the assignment result setting unit 28. As illustrated in FIG. 12, the assignment result setting unit 28 waits for assignment result notification and an execution start time (Step S61). Here, the execution start time is a start time of a job the execution of which is performed at the earliest timing.

In addition, the assignment result setting unit 28 determines whether or not a job the assignment result notification of which has been received is a job that is being executed (Step S62), and adds the job the notification of which has been received, to the executing job management table 25 (Step S63) when the job the notification of which has been received is a job that is being executed. Then, the assignment result setting unit 28 determines whether or not there is a job the execution start time of which has come (Step S64), and when there is no job the execution start time of which has come, the flow returns to Step S61, and the assignment result setting unit 28 waits for the assignment result notification and the execution start time.

When there is a job the execution start time of which has come, the assignment result setting unit 28 determines whether or not the job the execution start time of which has come is a swap-in job (Step S68). As a result, when the job is not a swap-in job, the assignment result setting unit 28 executes job execution start processing (Step S69), and removes the job the execution of which has been started, from the execution-standby job management table 24 (Step S70). When the job is a swap-in job, the assignment result setting unit 28 executes swap-in processing (Step S71), and removes the job the swap-in of which has been performed, from the execution-standby job management table 24 (Step S70).

In addition, when the job the assignment result notification of which has been received is not a job that is being executed (Step S62, No), the assignment result setting unit 28 determines whether or not the job is an execution-standby job (Step S65), and the flow proceeds to Step S64 when the job is not an execution-standby job. When the job is an execution-standby job, the assignment result setting unit 28 adds the job the assignment result notification of which has been received, to the execution-standby job management table 24 (Step S66). Then, the assignment result setting unit 28 sets a job that is to be executed at the earliest timing in the execution-standby job management table 24 as an execution start time standby job (Step S67), and the flow proceeds to Step S64. The assignment result setting unit 28 does not set a tentative assignment job as the execution start time standby job.

As described above, in a case where the assignment result of a job is notified, when the assignment result setting unit 28 updates the executing job management table 25 and the execution-standby job management table 24, the job scheduler 20 may manage the execution of the job.

As described above, in the embodiment, when the swap-out processing is executed in order to execute an emergency job to which the future assignment has been performed, the resource assignment unit 27 tentatively assigns a computer resource to the emergency job, and sets the tentative assignment information to the job management table 21 and the assignment management table 22. Thus, the resource assignment unit 27 may schedule jobs other than the emergency job before the execution of the emergency job is started, and may effectively utilize an excessive resource that occurs due to the swap-out of the job that is being executed.

In addition, the resource assignment unit 27 performs scheduling of the jobs in the order of the emergency job, a swap-in standby job, and a further job based on the tentative assignment information. Thus, the resource assignment unit 27 may avoid execution delay of the swap-in standby job due to a job that utilizes the excessive resource. That is, in a case where the job scheduler 20 assigns an excessive resource to the emergency job from among computer resources that have been utilized by the jobs that have been swapped out, to the subsequent job, even when exceedance determination of the estimated completion time of the emergency job is not performed, the avoidance of the swap-in delay may be achieved. In addition, it is also unnecessary to manage the emergency job, for the computer resource that has been utilized by the swapped-out job.

In addition, in the embodiment, in scheduling of the emergency job to which the tentative assignment is performed, the resource assignment unit 27 releases the setting of the tentative assignment information, and performs the scheduling. Thus, the resource assignment unit 27 may assign the tentatively assigned computer resource, to the emergency job to which the tentative assignment has been performed.

In addition, in the embodiment, the management table initialization unit 26 sets the schedule of the emergency job to which the tentative assignment has been performed, to the assignment management table 22 without changing the schedule, at the time of re-schedule. Thus, the job scheduler 20 may perform tentative assignment of the emergency job efficiently.

In the embodiment, the job management node 2 is described above, but a job management program having a function that is similar to that of the job management node 2 may be obtained by achieving the configuration of the job management node 2 through software. Therefore, a computer that executes the job management program is described below.

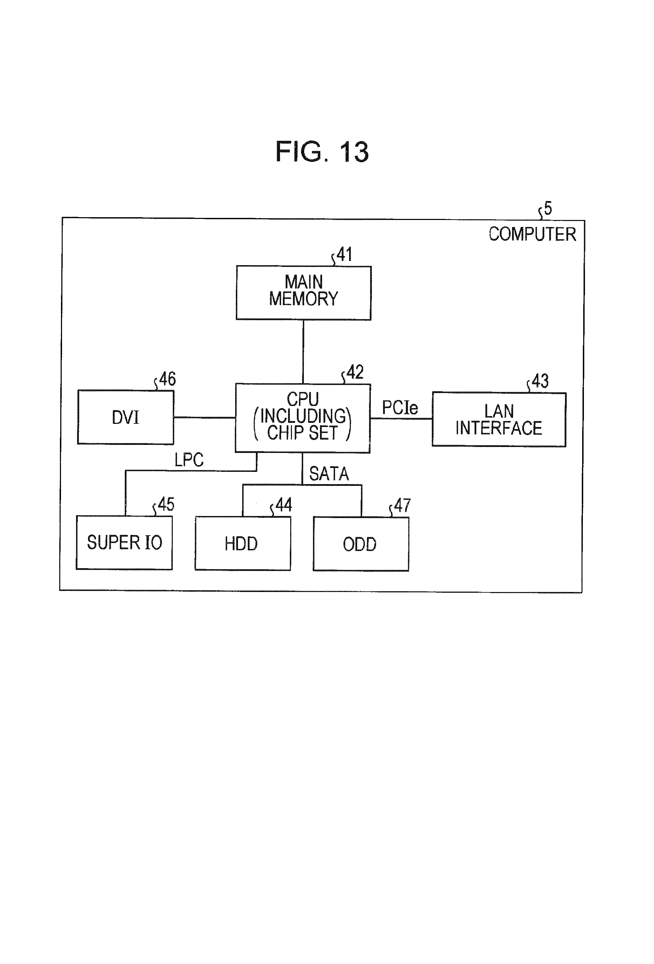

FIG. 13 is a diagram illustrating a hardware configuration of a computer that executes the job management program according to the embodiment. As illustrated in FIG. 13, a computer 5 includes a main memory 41, a CPU 42, a local area network (LAN) interface 43, and a hard disk drive (HDD) 44. In addition, the computer 5 includes a super input/output (IO) 45, a digital visual interface (DVI) 46, and an optical disk drive (ODD) 47.

The main memory 41 stores a program, a result in the middle of execution of the program, and the like. The CPU 42 is a central processing unit that reads the program from the main memory 41 and executes the program. The CPU 42 includes a chip set including a memory controller.

The LAN interface 43 is an interface that is used to connect the computer 5 to a further computer through a LAN. The HDD 44 is a disk device that stores a program and data, and the super IO 45 is an interface that is used to perform connection of an input device such as a mouse and a keyboard. The DVI 46 is an interface that is used to perform connection of a liquid crystal display device, and the ODD 47 is a device that performs read and write of a digital versatile disc (DVD).

The LAN interface 43 is connected to the CPU 42 by PCI Express, and the HDD 44 and the ODD 47 are connected to the CPU 42 by Serial Advanced Technology Attachment (SATA). The super IO 45 is connected to the CPU 42 by Low Pin Count (LPC).

In addition, the job management program that is executed in the computer 5 is stored in a DVD, read from the DVD by the ODD 47, and installed onto the computer 5. Alternatively, the job management program is stored in a database or the like of a further computer system that is connected to the computer 5 through the LAN interface 43, read from the database or the like, and installed onto the computer 5. In addition, the installed job management program is stored in the HDD 44, read by the main memory 41, and executed by the CPU 42.

In addition, in the embodiment, the case is described above in which the computation node 3 is arranged in the three dimension or one dimension, but the embodiment is not limited to such an example, and similarly, for example, the embodiment may be applied to a case in which the computation node 3 is arranged in a given dimension such as six dimension.

## Claims

1. A parallel computer system, comprising:
a plurality of computation nodes; and
a management node configured to include a memory and a processor coupled to the memory, wherein
the processor is configured to:
tentatively assign a computation node to an emergency job, allow scheduling of a further job to be performed while setting tentative assignment information that indicates a tentative assignment state to the emergency job and the tentatively assigned computation node when a job that is being executed in the computation node is swapped out in order to assign the computation node to the emergency job preferentially, and perform scheduling based on the tentative assignment information in order of the emergency job, a swap-in standby job, and a further job when scheduling of jobs is performed, and
control execution of the jobs based on the scheduling of the jobs, which is performed by the processor.

2. The parallel computer system according to claim 1, wherein
the processor releases the tentative assignment state that is set to the management node, and performs the scheduling when the processor performs scheduling of the emergency job to which tentative assignment is performed.

3. The parallel computer system according to claim 1 or 2, wherein
the processor does not change the schedule of the job to which the tentative assignment is performed at a time of re-schedule.

4. The parallel computer system according to claim 1 or 2, wherein
the processor performs scheduling on the job to which the tentative assignment is performed, again, at the time of re-schedule.

5. A control method of a parallel computer system that includes a plurality of computation nodes and a management node that includes a computer and controls the plurality of computation nodes, the control method causing the computer to execute a process, the process comprising:
tentatively assigning a computation node to an emergency job, allowing scheduling of a further job to be performed while setting tentative assignment information that indicates a tentative assignment state to the emergency job and the tentatively assigned computation node when a job that is being executed in the computation node is swapped out in order to assign the computation node to the emergency job preferentially, and performing scheduling based on the tentative assignment information in order of the emergency job, a swap-in standby job, and a further job when scheduling of jobs is performed; and
controlling execution of the jobs based on the scheduling of the jobs.

6. A non-transitory, computer-readable recording medium having stored therein a program for causing a computer to execute a process, the process comprising:
tentatively assigning a computation node to an emergency job, allowing scheduling of a further job to be performed while setting tentative assignment information that indicates a tentative assignment state to the emergency job and the tentatively assigned computation node when a job that is being executed in the computation node is swapped out in order to assign the computation node to the emergency job preferentially, and performing scheduling based on the tentative assignment information in order of the emergency job, a swap-in standby job, and a further job when scheduling of jobs is performed; and
controlling execution of the jobs based on the scheduling of the jobs.
